# EUROPEAN PATENT APPLICATION

(11) **EP 2 844 041 A1**
(43) Date of publication of application: **04.03.2015**
(21) Application number: 13777587.0
(22) Date of filing: 07.03.2013
(51) Int. Cl.: H05B 37/02

(54) **POWER SUPPLY**

(30) Priority: 18.04.2012 CN 201210121962; 16.07.2012 CN 201210260461; 16.07.2012 CN 201220361274 U
(71) Applicant: Shenzhen Gpoint Tech Company Limited, Shenzhen, Guangdong 518000 (CN)
(72) Inventor: ZHANG, Hongzhi, Shenzhen Guangdong 518000 (CN); XIE, Yongxian, Shenzhen Guangdong 518000 (CN)
(74) Representative: Delumeau, François Guy
(86) International application number: PCT/CN2013/072304
(87) International publication number: WO 2013/155904

(57) **Abstract**

A power supply, comprising a constant-current power supply, and at least two current-limiting protection branches (I1, ..., In) connected in parallel on the output loop of the constant-current power supply, the current limiting protection branches comprising at least one load (L1, ..., Lnn) and current-limiting protector (10, ..., In), and the designed current limiting value of the current-limiting protector in each branch being greater than the designed working current value of the current-limiting protection branch where the current-limiting protector is located. When the current of any one of the current-limiting protection branches is equal to or less than the designed working current of the branch, the current-limiting protector in the branch works in a saturated ON-state; and when the current of any one of the current-limiting protection branches is greater than the designed working current of the branch and reaches the designed current limiting value of the current-limiting protector in the branch, the current-limiting protector in the branch works in a current limiting state. The power supply can effectively control the short-circuit fault in a load, and when no short-circuit fault occurs in a load, a current-limiting protector works in a low power consumption state, which is favorable for power saving and environmental protection.

## Description

### FIELD of the Invention

The present invention relates to a power supply.

### BACKGROUND

At present a load driven by a constant-current usually works in the form of multiple loads connected in series, and because of the reliability and the working voltage, the number of series loads can not be excessive, so a combination of serial and parallel mode is generally used in some high-power applications.

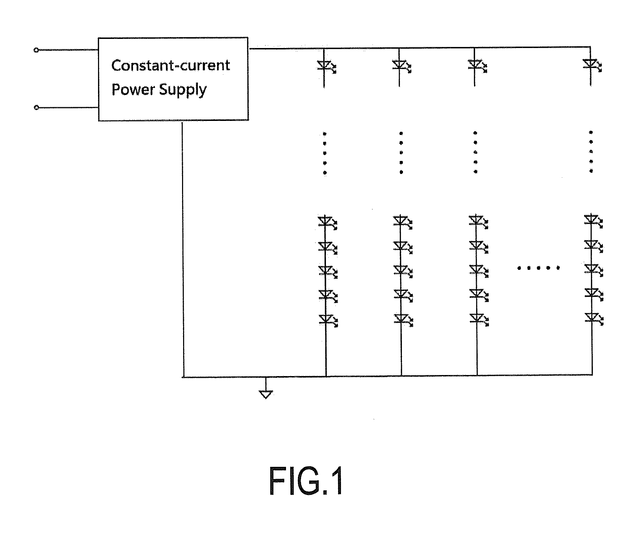

Figure 1 is a power supply in the prior art, as shown in the figure, the power supply includes a constant-current power supply, and multiple load branches connected to the constant-current power supply and connected to each other in parallel, wherein the load is driven by a constant current, specifically, the load is LED, the output current of the constant-current power supply will be naturally distributed to these lights at work. But when these LED lights in series and parallel combinations work, if short-circuit fault occurs in one load branch (short circuit is one of the most common failure modes of LED), since the sum of V_{f} of each LED in the branch is smaller than that in another branch, will lead to a substantial increase in current of the branch, the current is often beyond the maximum work current of LED, extremely easy to cause the LED overheating.

### SUMMARY

In order to solve the problems existing in the prior art, the present invention discloses a power supply, comprising a constant-current power supply, and at least two current-limiting protection branches connected in parallel on the output loop of the constant-current power supply, the current limiting protection branches comprising at least one load and one current-limiting protector, the load is driven by a constant current, and the designed current limiting value of a current-limiting protector in each branch being greater than the designed working current value of the current-limiting protection branch where the current-limiting protector is located. When the current of any one of the current-limiting protection branches is equal to or less than the designed working current of the branch, the current-limiting protector in the branch works in a saturated ON-state, its output impedance approaches zero or the minimum output impedance which the circuit can have; and when the current of any one of the current-limiting protection branches is greater than the designed working current of the branch and reaches the designed current limiting value of the current-limiting protector in the branch, the current-limiting protector in the branch works in a current limiting state, its output impedance approaches infinity or the maximum output impedance which the circuit can have.

As a further improvement of the technical solution, the designed working current values of each current-limiting protection branch are equal.

As a further improvement of the technical solution, the designed working current values of each current-limiting protection branch are not equal.

As a further improvement of the technical solution, the current limiting value of the current-limiting protector is greater than the designed working current value of the current-limiting protection branch where the current-limiting protector is located above 1%, to ensure that the linear constant-current does not work prematurely, so as to avoid unnecessary power consumption.

As a further improvement of the technical solution, the current limiting value of the current-limiting protector is less than or equal to the maximum current value allowed to pass through the current-limiting protection branch where the current-limiting protector is located, to avoid the current limiting value of the linear constant-current circuit too large to have protection.

As a further improvement of the technical solution, the designed current limiting value of the current-limiting protector is determined according to the following rules: when the current of any one of the current-limiting protection branches reaches the designed current limiting value of the current-limiting protector in the branch, the current of any one or more of the current-limiting protection branches connected in parallel with the current-limiting protection branch is not less than their own designed minimum working current.

As a further refinement of the technical solution, the current-limiting protector comprises a linear constant-current circuit.

As a further refinement of the technical solution, the linear constant-current circuit comprises an operational amplifier, an N-channel MOSFET, a current detecting resistor, wherein a drain of the N-channel MOSFET is connected to the load, a source of the N-channel MOSFET is grounded through the current detecting resistor, a gate of the N-channel MOSFET is connected to an output terminal of the operational amplifier, a non-inverting input terminal of the operational amplifier is supplied with an voltage reference, an inverting input terminal of the operational amplifier is connected between the source of the N-channel MOSFET and the current detecting resistor.

As a further refinement of the technical solution, the linear constant-current circuit comprises an operational amplifier, a P-channel MOSFET, and a current detecting resistor, wherein a source of the P-channel MOSFET is connected to a load, a drain of the P-channel MOSFET is grounded through the current detecting resistor, a gate of the P-channel MOSFET is connected to an output terminal of the operational amplifier, a non-inverting input terminal of the operational amplifier is supplied with an voltage reference, an inverting input terminal of the operational amplifier is connected between the drain of the P-channel MOSFET and the current detecting resistor.

As a further refinement of the technical solution, the linear constant-current circuit comprises an operational amplifier, an NPN transistor, a current detecting resistor, and a current limiting resistor, wherein a collector of the NPN transistor is connected to a load, an emitter of the NPN transistor is grounded through the current detecting resistor, a base of the NPN transistor is connected to an output terminal of the operational amplifier through the current limiting resistor, a non-inverting input terminal of the operational amplifier is supplied with an voltage reference, an inverting input terminal of the operational amplifier is connected between the emitter of the NPN transistor and the current detecting resistor.

As a further refinement of the technical solution, the linear constant-current circuit comprises an operational amplifier, a PNP transistor, a current detecting resistor, and a current limiting resistor, wherein an emitter of the PNP transistor is connected to a load, a collector of the PNP transistor is grounded through the current detecting resistor, a base of the PNP transistor is connected to an output terminal of the operational amplifier through the current limiting resistor, a non-inverting input terminal of the operational amplifier is supplied with an voltage reference, an inverting input terminal of the operational amplifier is connected between the collector of the NPN transistor and the current detecting resistor.

As a further refinement of the technical solution, the linear constant-current circuit comprises a three-terminal adjustable shunt regulator, an NPN transistor, a current detecting resistor, and a current limiting resistor, wherein a collector of the NPN transistor is connected to a load, an emitter of the NPN transistor is grounded through the current detecting resistor, a base of the NPN transistor is supplied with a supply voltage through the current limiting resistor, a cathode of the three-terminal adjustable shunt regulator is connected between the current limiting resistor and the base of the NPN transistor, an anode of the three-terminal adjustable shunt regulator is grounded, a reference terminal of three-terminal adjustable shunt regulator is connected between the current detecting resistor and an emitter of the NPN transistor.

As a further refinement of the technical solution, the linear constant-current circuit is current regulator diode, wherein a cathode of the current regulator diode is connected to a load; an anode of the current regulator diode is connected to an anode of a lamp power supply.

As a further refinement of the technical solution, the linear constant-current circuit is current regulator diode, wherein an anode of the current regulator diode is connected to a load; a cathode of the current regulator diode is grounded.

As a further refinement of the technical solution, the constant-current power supply is a switching constant-current power supply.

As a further refinement of the technical solution, the constant-current power supply is a linear constant-current power supply.

As a further refinement of the technical solution, the constant-current power supply is in the form of AC-DC, namely, the input is AC, and the output is DC.

As a further refinement of the technical solution, the constant-current power supply is in the form of DC-DC, namely, the input and the output are all DC.

As a further refinement of the technical solution, the constant-current power supply has a function of electrical isolation.

As a further refinement of the technical solution, the constant-current power supply has no function of electrical isolation.

The present invention discloses a power supply, comprising a constant-current power supply, and at least two current-limiting protection branches connected in parallel on the output loop of the constant-current power supply, the current limiting protection branches comprising at least one load and one current-limiting protector, the load is driven by a constant current, and the designed current limiting value of a current-limiting protector of each branch being greater than the designed working current value of the current-limiting protection branch where the current-limiting protector is located. When the current of any one of the current-limiting protection branches is equal to or less than the designed working current of the branch, the current-limiting protector in the branch works in a saturated ON-state, its output impedance approaches zero or the minimum output impedance which the circuit can have; and when the current of any one of the current-limiting protection branches is greater than the designed working current of the branch and reached the designed current limiting value of the current-limiting protector in the branch, the current-limiting protector in the branch works in a current limiting state, its output impedance approaches infinity or the maximum output impedance which the circuit can have. The power supply can effectively control the short-circuit fault in a load, and when no short-circuit fault occurs in a load, a linear constant-current circuit works in a low power consumption state, which is favorable for power saving and environmental protection.

### BRIEF DESCRIPTION OF THE DRAWING

FIG.1 is a circuit diagram of a power supply;
FIG.2 is a circuit diagram of a power supply of one embodiment of the present invention;
FIG.3 is a circuit diagram of a power supply of another embodiment of the present invention;
FIG.4 is a circuit diagram of a power supply of another embodiment of the present invention;
FIG.5 is a circuit diagram of a power supply of another embodiment of the present invention;
FIG.6 is a circuit diagram of a power supply of another embodiment of the present invention;
FIG.7 is a circuit diagram of a power supply of another embodiment of the present invention;
FIG.8 is a circuit diagram of a power supply of another embodiment of the present invention;

### DETAILED DESCRIPTION OF THE EMBODIMENTS

It is understood that the specific embodiments described herein are merely used to explain the present invention and are not intended to limit the present invention.

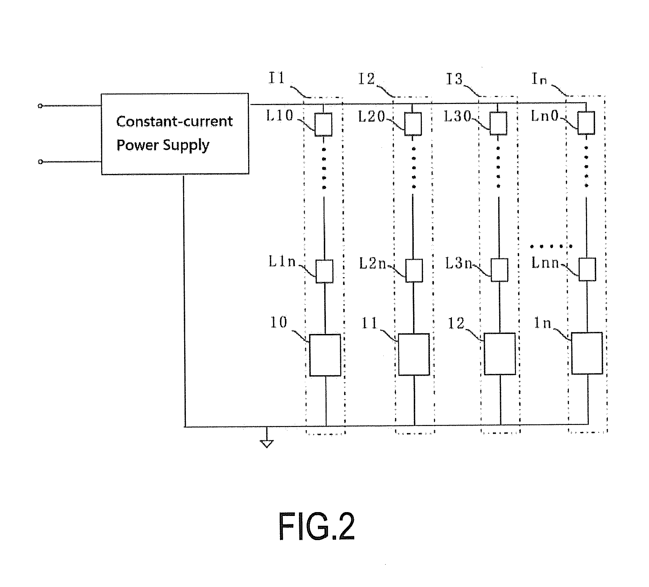

FIG.2 is a circuit diagram of a power supply of one embodiment of the present invention, as shown in FIG.2, the power supply comprises a constant-current power supply, and at least two current-limiting protection branches connected in parallel on the output loop of the constant-current power supply, the current limiting protection branches comprises at least one load L10-Lnn and one current-limiting protector 10-ln, the load is driven by a constant current, and the designed current limiting value of a current-limiting protector of each branch is greater than the designed working current value of the current-limiting protection branch where the current-limiting protector is located. When the current of any one of the current-limiting protection branches is equal to or less than the designed working current of the branch, the current-limiting protector in the branch works in a saturated ON-state, its output impedance approaches zero or the minimum output impedance which the circuit can have; and when the current of any one of the current-limiting protection branches is greater than the designed working current of the branch and reached the designed current limiting value of the current-limiting protector in the branch, the current-limiting protector in the branch works in a current limiting state, its output impedance approaches infinity or the maximum output impedance which the circuit can have, the current-limiting protector works in a current limiting state, the current of the load in the branch is limited to the designed current limiting value.

In some embodiments of the present invention, the constant-current power supply is a switching constant-current power supply. In some embodiments of the present invention, the constant-current power supply is a linear constant-current power supply. In some embodiments of the present invention, the constant-current power supply is in the form of an AC-DC, namely, the input is AC, and the output is DC. In some embodiments of the present invention, the constant-current power supply is in the form of a DC-DC, namely, the input and the output are all DC. In some embodiments of the present invention, the constant-current power supply has a function of electrical isolation. In some embodiments of the present invention, the constant-current power supply has no function of electrical isolation.

In some embodiments, by selecting the loads in each current-limiting protection branch, for example, selecting the loads with exactly same parameter and number in each branch, or connecting resistors in series in corresponding branch under the circumstance that load parameters and number are different, so that each current-limiting protection branch can equally distribute the output current of the constant-current power supply.

In some embodiments, it can also according to the actual application, without considering the differences among the loads in each branch, so that each current-limiting protection branch can naturally distribute the output current of the constant-current power supply.

In an embodiment of the present invention, the designed current limiting value of the current-limiting protector is greater than the designed working current value of the load in the current-limiting protection branch where the current-limiting protector is located above 1%, to ensure that the current-limiting protector does not prematurely limiting current, so as to avoid unnecessary power consumption.

In some embodiments of the present invention, the designed current limiting value is less than or equal to the designed maximum current value allowed to pass through the current-limiting protection branch where the current-limiting protector is located, to avoid the designed current limiting value of the current-limiting protector too large to have protection.

In an embodiment of the present invention, the designed current limiting value of the current-limiting protector is determined according to the following rules: when the current of any one of the current-limiting protection branches reaches the designed current limiting value of the current-limiting protector in the branch, the current of any one or more of the current-limiting protection branches connected in parallel with the current-limiting protection branch is not less than its own designed minimum working current, to avoid other branches can not work normally due to fault in a branch. In an embodiment of the present invention, the current-limiting protector is linear constant-current circuit.

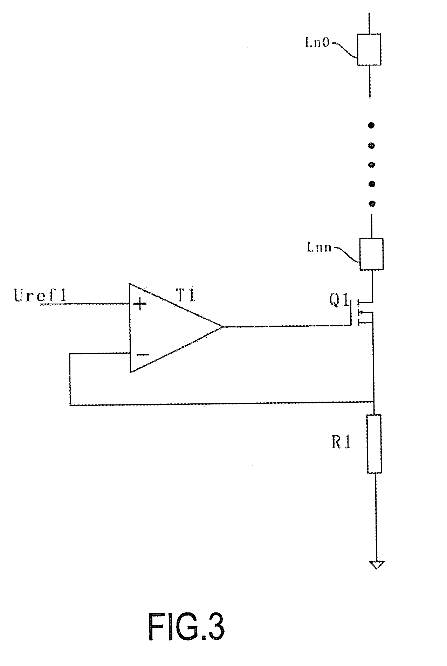

FIG.3 is a circuit diagram of a power supply of another embodiment of the present invention, as shown in fig.3, in the embodiment of the present invention, the linear constant-current circuit comprises an operational amplifier T1, an N-channel MOSFET Q1, a current detecting resistor R1, wherein a drain of the N-channel MOSFET is connected to a load, a source of the N-channel MOSFET is grounded through the current detecting resistor R1, a gate of the N-channel MOSFET is connected to an output terminal of the operational amplifier, a non-inverting input terminal of the operational amplifier is supplied with an voltage reference Uref1, an inverting input terminal of the operational amplifier is connected between the source of the N-channel MOSFET and the current detecting resistor. When working, firstly the constant-current power supply outputs a total current Io, then a plurality of current-limiting protection branches in parallel distribute the current naturally, when short-circuit fault occurs in a load in a current-limiting protection branch, the current In of the current-limiting protection branch increases gradually, when In is less than uref1/R, the operational amplifier controls the N-channel MOSFET to work in a saturated ON-state, when In reaches uref1/R1, the operational amplifier control the N-channel MOSFET to work in a constant current region, the current of the current-limiting protection branch is limited to uref1/R1, to current-limiting protect the load in the current-limiting protection branch.

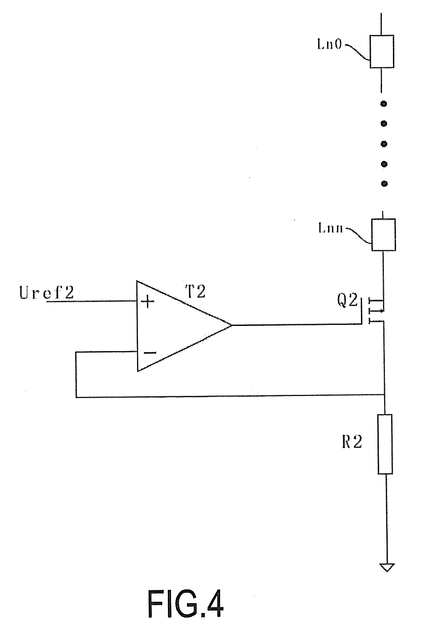

FIG.4 is a circuit diagram of a power supply of another embodiment of the present invention, as shown in fig.4, in the embodiment of the present invention, the linear constant-current circuit comprises an operational amplifier T2, a P-channel MOSFET Q2, a current detecting resistor R2, wherein a source of the P-channel MOSFET is connected to a load, a drain of the P-channel MOSFET is grounded through the current detecting resistor R2, a gate of the P-channel MOSFET is connected to an output terminal of the operational amplifier, a non-inverting input terminal of the operational amplifier is supplied with an voltage reference Uref2, an inverting input terminal of the operational amplifier is connected between the drain of the P-channel MOSFET and the current detecting resistor. The concrete working principle is similar to that of the above embodiment, which will not be repeated herein.

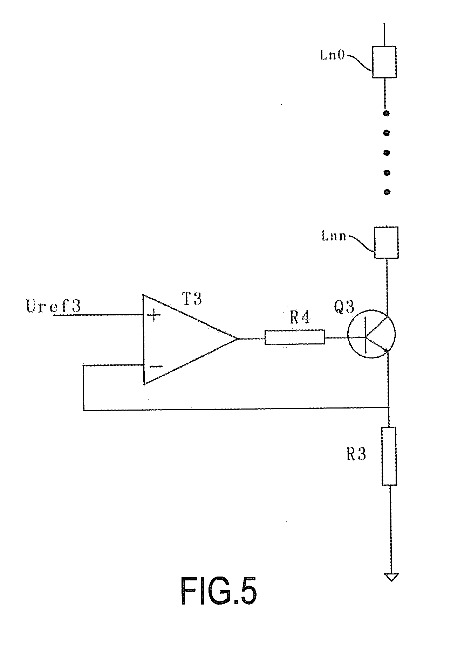

FIG.5 is a circuit diagram of a power supply of another embodiment of the present invention, as shown in fig.5, in the embodiment of the present invention, the linear constant-current circuit comprises an operational amplifier T3, an NPN transistor Q3, a current detecting resistor R3, and a current limiting resistor R4, wherein a collector of the NPN transistor is connected to a load, an emitter of the NPN transistor is grounded through the current detecting resistor R3, a base of the NPN transistor is connected to an output terminal of the operational amplifier through the current limiting resistor R4, a non-inverting input terminal of the operational amplifier is supplied with an voltage reference Uref3, an inverting input terminal of the operational amplifier is connected between the emitter of the NPN transistor and the current detecting resistor. When working, firstly the constant-current power supply outputs a total current Io, then a plurality of current-limiting protection branches in parallel distribute the current naturally, when short-circuit fault occurs in a load in a current-limiting protection branch, the current In of the current-limiting protection branch increases gradually, when In is less than uref3/R3, the operational amplifier controls the NPN transistor to work in a saturated ON-state, when In is greater than or equal to uref3/R3, the operational amplifier controls the NPN transistor to work in a constant current region, the current of the current-limiting protection branch is limited to uref3/R3, to current-limiting protect the load in the current-limiting protection branch.

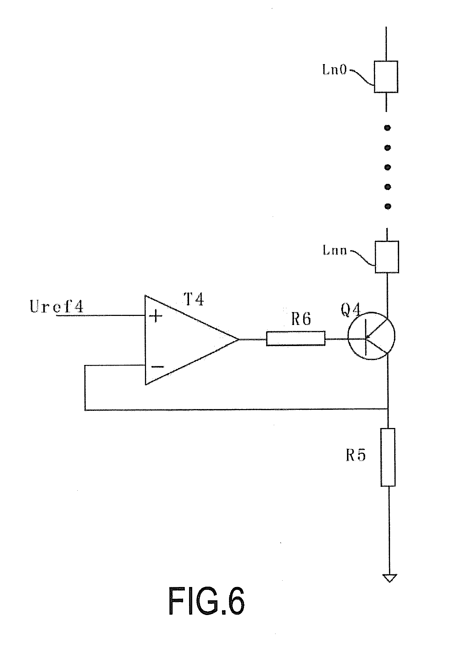

FIG.6 is a circuit diagram of a power supply of another embodiment of the present invention, as shown in fig.6, in the embodiment of the present invention, the linear constant-current circuit comprises an operational amplifier T4, a PNP transistor Q4, a current detecting resistor R5, and a current limiting resistor R6, wherein an emitter of the PNP transistor is connected to a load, a collector of the PNP transistor is grounded through the current detecting resistor R5, a base of the PNP transistor is connected to an output terminal of the operational amplifier through the current limiting resistor R6, a non-inverting input terminal of the operational amplifier is supplied with an voltage reference Uref4, an inverting input terminal of the operational amplifier is connected between the collector of the PNP transistor and the current detecting resistor. The concrete working principle is similar to that of the above embodiment, which will not be repeated herein.

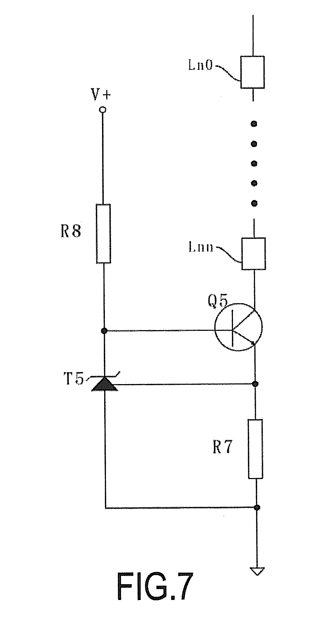

FIG.7 is a circuit diagram of a power supply of another embodiment of the present invention, as shown in fig.7, in the embodiment of the present invention, the linear constant-current circuit comprises a three-terminal adjustable shunt regulator T5, an NPN transistor Q5, a current detecting resistor R7, and a current limiting resistor R8, wherein a collector of the NPN transistor is connected to a load, an emitter of the NPN transistor is grounded through the current detecting resistor R7, a base of the NPN transistor is supplied with a power supply voltage V+ through the current limiting resistor, a cathode of the three-terminal adjustable shunt regulator is connected between the current limiting resistor and the base of the NPN transistor, an anode of the three-terminal adjustable shunt regulator is grounded, a reference terminal of the three-terminal adjustable shunt regulator is connected between the current detecting resistor and the emitter of the NPN transistor. When working, firstly the constant-current power supply outputs a total current Io, then a plurality of current-limiting protection branches in parallel distribute the current naturally, when short-circuit fault occurs in a load in a current-limiting protection branch, the current In of the current-limiting protection branch increases gradually, when In is less than uref5/R5, wherein uref5 is an output of a reference terminal of the three-terminal adjustable shunt regulator, the operational amplifier controls the NPN transistor to work in a saturated ON-state, when In reaches uref5/R5, the operational amplifier controls the NPN transistor to work in a constant current region, the current of the current-limiting protection branch is limited to uref5/R5, to current-limiting protect the load in the current-limiting protection branch.

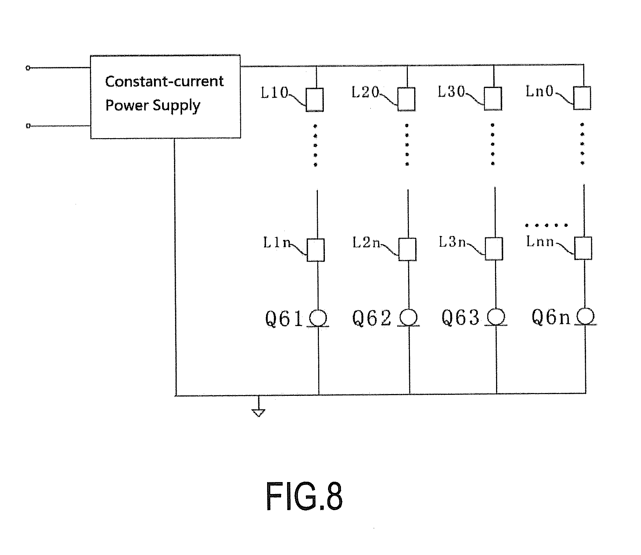

FIG.8 is a circuit diagram of a power supply of another embodiment of the present invention, as shown in fig.8, in the embodiment of the present invention, the linear constant-current circuit is a current regulator diode Q61-Q6n, wherein an anode of the current regulator diode is connected to a load; a cathode of the current regulator diode is grounded. When working, firstly the constant current power supply outputs a total current Io, then a plurality of current-limiting protection branches in parallel distribute the current naturally, when short-circuit fault occurs in a load in a current-limiting protection branch, the current In of the current-limiting protection branch increases gradually, when In is less than a setting constant current value of the current regulator diode, the current regulator diode is equivalent to a wire, have no blocking effect on the current of the load in the branch, when In is equal to the setting constant current value of the current regulator diode, In is limited to the setting constant current value of the current regulator diode by the current regulator diode. In some embodiments, the current regulator diode can also be arranged between the constant current power supply and a load in the current-limiting protection branch, an anode of the current regulator diode is connected to the constant-current power supply, and a cathode of the current regulator diode is connected to a load.

To compare with the prior art, the power supply of the present invention can effectively control the short-circuit fault in multi-channel parallel loads in parallel circuit driven by a constant current, which can be widely used in these occasions such as multi-channel parallel LED lighting circuit, electric dust collector circuit with a plurality of independent electric field.

The examples hereinbefore described are merely preferred embodiments of the present invention, are not intend to limit the patent protection scope of the present invention, any equivalent structures or equivalent process transformations made by using the description and accompanying drawings of the present invention, either directly or indirectly use in other relative fields, are all falling within the patent protection scope of the present invention.

## Claims

1. A power supply comprising:
a constant-current power supply, at least two current-limiting protection branches connected in parallel on the output loop of the constant-current power supply, the current-limiting protection branches comprising at least one load and one current-limiting protector;
the load is driven by a constant current; the designed current limiting value of the current-limiting protector in each branch is greater than the designed working current value of the current-limiting protection branch where the current-limiting protector is located;
when the current of any one of the current-limiting protection branches is equal to or less than the designed working current of the branch, the current-limiting protector in the branch works in a saturated ON-state, its output impedance approaches zero or the minimum output impedance which the circuit can have;
when the current of any one of the current-limiting protection branches is greater than the designed working current of the branch and reaches the designed current limiting value of the current-limiting protector in the branch, the current-limiting protector in the branch works in a current limiting state, its output impedance approaches infinity or the maximum output impedance which the circuit can have.

2. The power supply as claimed in claim 1, wherein the designed working current values of each current-limiting protection branch are equal.

3. The power supply as claimed in claim 1, wherein the designed working current values of each current-limiting protection branch are not equal.

4. The power supply as claimed in claim 1, wherein the designed current limiting value of the current-limiting protector is greater than the designed working current value of the current-limiting protection branch where the current-limiting protector is located above 1%.

5. The power supply as claimed in claim 1, wherein the designed current limiting value of the current-limiting protector is less than or equal to the designed maximum current value allowed to pass through the current-limiting protection branch where the current-limiting protector is located.

6. The power supply as claimed in claim 1, wherein the designed current limiting value of the current-limiting protector is determined according to the following rules: when the current of any one of the current-limiting protection branches reaches the designed current limiting value of the current-limiting protector in the branch, the current of any one or more of the current-limiting protection branches connected in parallel with the current-limiting protection branch is not less than its own designed minimum working current.

7. The power supply as claimed in any one of claims 1-6, wherein the current-limiting protector comprises a linear constant-current circuit.

8. The power supply as claimed in claim 7, wherein the linear constant-current circuit comprises an operational amplifier, an N-channel MOSFET, and a current detecting resistor, wherein a drain of the N-channel MOSFET is connected to the load, a source of the N-channel MOSFET is grounded through the current detecting resistor, a gate of the N-channel MOSFET is connected to an output terminal of the operational amplifier, a non-inverting input terminal of the operational amplifier is supplied with an voltage reference, an inverting input terminal of the operational amplifier is connected between the source of the N-channel MOSFET and the current detecting resistor.

9. The power supply as claimed in claim 7, wherein the linear constant-current circuit comprises an operational amplifier, a P-channel MOSFET, and a current detecting resistor, wherein a source of the P-channel MOSFET is connected to the load, a drain of the P-channel MOSFET is grounded through the current detecting resistor, a gate of the P-channel MOSFET is connected to an output terminal of the operational amplifier, a non-inverting input terminal of the operational amplifier is supplied with an voltage reference, an inverting input terminal of the operational amplifier is connected between the drain of the P-channel MOSFET and the current detecting resistor.

10. The power supply as claimed in claim 7, wherein the linear constant-current circuit comprises an operational amplifier, an NPN transistor, a current detecting resistor, and a current limiting resistor, wherein a collector of the NPN transistor is connected to the load, an emitter of the NPN transistor is grounded through the current detecting resistor, a base of the NPN transistor is connected to an output terminal of the operational amplifier through the current limiting resistor, a non-inverting input terminal of the operational amplifier is supplied with an voltage reference, an inverting input terminal of the operational amplifier is connected between the emitter of the NPN transistor and the current detecting resistor.

11. The power supply as claimed in claim 7, wherein the linear constant-current circuit comprises an operational amplifier, a PNP transistor, a current detecting resistor, and a current limiting resistor, wherein an emitter of the PNP transistor is connected to the load, a collector of the PNP transistor is grounded through the current detecting resistor, a base of the PNP transistor is connected to an output terminal of the operational amplifier through the current limiting resistor, a non-inverting input terminal of the operational amplifier is supplied with an voltage reference, an inverting input terminal of the operational amplifier is connected between the collector of the NPN transistor and the current detecting resistor.

12. The power supply as claimed in claim 7, wherein the linear constant-current circuit comprises a three-terminal adjustable shunt regulator, an NPN transistor, a current detecting resistor, and a current limiting resistor, wherein a collector of the NPN transistor is connected to the load, an emitter of the NPN transistor is grounded through the current detecting resistor, a base of the NPN transistor is supplied with a power supply voltage through the current limiting resistor, a cathode of the three-terminal adjustable shunt regulator is connected between the current limiting resistor and the base of the NPN transistor, an anode of the three-terminal adjustable shunt regulator is grounded, a reference terminal of the three-terminal adjustable shunt regulator is connected between the current detecting resistor and the emitter of the NPN transistor.

13. The power supply as claimed in claim 7, wherein the linear constant-current circuit is a constant current diode, wherein a cathode of the constant-current diode is connected to the load, and an anode of the constant-current diode is connected to a positive electrode of lamp power supply.

14. The power supply as claimed in claim 7, wherein the linear constant-current circuit is a constant-current diode, wherein an anode of the constant-current diode is connected to the load, and a cathode of the constant-current diode is connected to a negative electrode of lamp power supply.

15. The power supply as claimed in any one of claims 1-6, wherein the constant-current power supply is a switching constant-current power supply.

16. The power supply as claimed in any one of claims 1-6, wherein the constant-current power supply is a linear constant-current power supply.

17. The power supply as claimed in any one of claims 1-6, wherein the constant-current power supply is in the form of AC-DC, namely, the input is AC, and the output is DC.

18. The power supply as claimed in any one of claims 1-6, wherein the constant-current power supply is in the form of DC-DC, namely, the input and the output are all DC.

19. The power supply as claimed in any one of claims 1-6, wherein the constant-current power supply has a function of electrical isolation.

20. The power supply as claimed in any one of claims 1-6, wherein the constant-current power supply has no function of electrical isolation.
